# EUROPEAN PATENT SPECIFICATION

(11) **EP 3 038 332 B1**
(45) Date of publication and mention of the grant of the patent: **13.11.2019**
(21) Application number: 14837999.3
(22) Date of filing: 16.04.2014
(51) Int. Cl.: H04M 1/725, H04M 1/275, H04M 1/2745, G06F 16/174, G06F 3/0488, G06F 17/11, G06F 3/0482, G06F 16/11

(54) **PROCESSING METHOD AND TOUCH TERMINAL FOR COMBINING OPERATION AND DUPLICATE REMOVAL OPERATION ON CONTACT ENTRIES**
VERARBEITUNGSVERFAHREN UND BERÜHRUNGSENDGERÄT ZUR KOMBINATION VON BETRIEB UND DUPLIKATENTFERNUNGSOPERATION FÜR KONTAKTEINTRÄGE
PROCÉDÉ DE TRAITEMENT ET TERMINAL TACTILE POUR FONCTION DE COMBINAISON ET FONCTION DE SUPPRESSION DE DOUBLE SUR DES ENTRÉES DE CONTACT

(30) Priority: 19.08.2013 CN 201310361512
(43) Date of publication of application: 29.06.2016
(73) Proprietor: Huizhou TCL Mobile Communication Co., Ltd., Hui Zhou Guangdong 516006 (CN)
(72) Inventor: LEI, Ming, Huizhou Guangdong 516006 (CN)
(74) Representative: Brachmann, Roland W.
(86) International application number: PCT/CN2014/075516
(87) International publication number: WO 2015/024387

(56) References cited:
- EP-A1- 2 475 156
- EP-A1- 2 602 977
- CN-A- 103 037 061
- CN-A- 103 095 900
- CN-A- 103 179 244
- CN-A- 103 179 244
- CN-A- 103 442 135
- US-A1- 2006 085 483
- US-A1- 2011 307 455
- US-A1- 2013 203 468

## Description

The present invention relates to the field of intelligent terminal technologies, and in particular relates to a processing method and a touch terminal for merge and deduplication operations on contact entries.

Contact information on an intelligent terminal, such as a smartphone, can be entered into a contact list inputted manually, imported by SIM card, imported by SD card, imported from the network data backup, and the like. In the import process, some duplicated or redundant information may sometime exist, for example: multiple records correspond to the same contact name, and the contact has the same telephone number, other information (e.g. address, etc.) is identical as well; alternatively, multiple records correspond to the same contact name, and the contact's telephone numbers are different or not completely the same (i.e. there are multiple numbers), and even other information (e.g. address, etc.) is not the same.

When encountering the above situation, a user now would usually spend more time on finding the desired number from the contact list, and, at the same time, would perform merging processing on the redundant or duplicated information. Since a smartphone itself does not know what needs to be merged and what does not need to be merged (that is because, in real life, there may be two different contacts having the same name), the user can only delete some redundant information and merge duplicated information through manual processing.

When processing the above redundant information and duplicated information, a user typically opens the contact entry information, selects an undesired record (i.e. the contact entry), and then deletes said record; alternatively, the user needs to add the information from other contact entries (e.g. adding a telephone number) into one of the contact entries, and then deletes other contact entries. All of these processes require the user to carry out many complicated operations, to open many window, and switch among different windows, which is very inconvenient and cannot reflect the intelligent features of an intelligent terminal.

US 2013/0203468 A1 discloses methods and devices for merging contact records. In one example aspect, a method includes: determining if an input via the touchscreen display corresponds to a predetermined merge-contact-record gesture that is a multi-touch gesture that includes a selection of a first interface element and a second interface element, the first interface element being associated with a first contact record and the second interface element being associated with a second contact record; and if the input corresponds to the pre-determined merge-contact-record gesture, merging the first contact record with the second contact record.

CN 103179244 A discloses a contact merging method of a mobile terminal. The contact merging method of the mobile terminal includes the following steps: first contact records selected from a contact list of the mobile terminal by a user are received, and a merging control is activated to pop up a contact merging interface; contact records to be merged is received, wherein the contact records are selected in the contract merging surface by the user, the first contact records and the contact records to be merged are merged to form second contact records, wherein the second contact records comprise a union set of information in the first contact records and the contact records to be merged; and the second contact records are added in the contact list, and the first contact records and the contact records to be merged are deleted. Further disclosed is a contact merging device of the mobile terminal and the mobile terminal with the contact merging device.

In light of the above drawbacks of the prior art, the object of the present invention is to provide a processing method and a touch terminal for merge and deduplication operations on contact entries, which can merge contact records by dragging contact entries, remove the duplicated information while merging, and detect conflict information.

This is solved according to the features of the independent claims. Further embodiments result from the depending claims.

To obtain the above object, the present invention employs the following technical solution:

A method is provided for processing merge and deduplication operations on contact entries of a terminal comprising a multi-point touch touchscreen, comprising:
A. Opening an address book and displaying all contact entries;
B. Recording selected contact entries according to a selection action on contact entries, receiving a drag action to merge contact entries, and merging the selected contact entries according to the drag action;
C. Removing the duplicated information in the selected contact entries during merging, and detecting conflict information in the selected contact entries.

Step B specifically comprises:
B11. When detecting that there are two touch points on the touchscreen, recording all contact entries between the coordinates of said two touch points;
B12. Receiving a drag action to merge contact entries, when the contact entry at one touch point is dragged to partially overlap with the contact entry at the other touch point, merging said all contact entries.

According to an embodiment, Step A further comprises: sorting the contact entries according to the contact names.

According to an embodiment, Step B specifically comprises:
B21. When detecting that there are two touch points on the touchscreen, recording contact entries in the address book at the coordinates of said two touch points;
B22. Receiving a drag action to merge contact entries, when the contact entry at one touch point is dragged to partially overlap with the contact entry at the other touch point, merging these two contact entries.

According to an embodiment, in Step B21, the contact entries in the address book at the coordinates of said two touch points are two adjacent contact entries or two separated contact entries in the address book.

According to an embodiment, when dragging the contact entry, an offset is set through the function offsetTopAndBottom(d) for the view.

According to an embodiment, Step C specifically comprises:
C1. When merging contact entries, removing duplicated information in the selected contact entries;
C2. Detecting if there is conflict among all pieces of information in the selected contact entries;
C3. If there is, outputting a prompt message to prompt the user whether to ignore the conflicted information;
C4. If yes, saving the conflicted information.

According to an embodiment, when merging the selected contact entries, merging through the function madapter.mergeContacts(choosedobjs).

Also, a method is provided for processing merge and deduplication operations on contact entries, wherein it comprises:
A. Opening an address book and displaying all contact entries;
B. Recording selected contact entries according to a selection action on contact entries, receiving a drag action to merge contact entries, and merging the selected contact entries according to the drag action;
C. Removing the duplicated information in the selected contact entries during merging, and detecting conflict information in the selected contact entries.

Step C specifically comprises:
C1. When merging contact entries, removing duplicated information in the selected contact entries;
C2. Detecting if there is conflict among all pieces of information in the selected contact entries;
C3. If there is, outputting a prompt message to prompt the user whether to ignore the conflicted information;
C4. If yes, saving the conflicted information.

Wherein each attribute of each contact entry is compared, if an attribute only exists in one contact entry, it indicates no conflict; if multiple contact entries have an identical attribute, but these attributes have the same value, it indicates that those are duplicated information and have no conflict, and only one piece of the information needs to be kept during merging; when multiple contact entries have an identical attribute and more than two values are different, a conflict will be detected; and the conflict information will be recorded, specifically comprising: name of the conflict item and conflict content, and prompting the user whether to ignore, if the user chooses to ignore, then keeping the conflicted information, if the user does not ignore, then deleting the redundant information according to the user selection.

According to an embodiment, Step A further comprises: sorting the contact entries according to the contact names.

According to an embodiment, Step B specifically comprises:
B11. When detecting that there are two touch points on the touchscreen, recording all contact entries between the coordinates of said two touch points;
B12. Receiving a drag action to merge contact entries, when the contact entry at one touch point is dragged to partially overlap with the contact entry at the other touch point, merging said all contact entries.

According to an embodiment, Step B specifically comprises:
B21. When detecting that there are two touch points on the touchscreen, recording contact entries in the address book at the coordinates of said two touch points;
B22. Receiving a drag action to merge contact entries, when the contact entry at one touch point is dragged to partially overlap with the contact entry at the other touch point, merging these two contact entries.

According to an embodiment, in Step B21, the contact entries in the address book at the coordinates of said two touch points are two adjacent contact entries or two separated contact entries in the address book.

According to an embodiment, when dragging the contact entry, an offset is set through the function offsetTopAndBottom(d) for the view.

According to an embodiment, when merging the selected contact entries, merging through the function madapter.mergeContacts(choosedobjs).

A method is provided for processing merge and deduplication operations on contact entries, wherein it comprises:
A. Opening an address book and displaying all contact entries;
B. Recording selected contact entries according to a selection action on contact entries, receiving a drag action to merge contact entries, and merging the selected contact entries according to the drag action;
C. Removing the duplicated information in the selected contact entries during merging, and detecting conflict information in the selected contact entries;
wherein, Step A further comprises: sorting the contact entries according to the contact names.

Step C specifically comprises:
C1. When merging contact entries, removing duplicated information in the selected contact entries;
C2. Detecting if there is conflict among all pieces of information in the selected contact entries;
C3. If there is, outputting a prompt message to prompt the user whether to ignore the conflicted information;
C4. If yes, saving the conflicted information.

According to an embodiment, Step C further comprises: comparing each attribute of each contact entry, if an attribute only exists in one contact entry, it indicates no conflict; if multiple contact entries have an identical attribute, but these attributes have the same value, it indicates that those are duplicated information and have no conflict, and only one piece of the information needs to be kept during merging; when multiple contact entries have an identical attribute and more than two values are different, a conflict will be detected; and recording the conflict information, specifically comprising: name of the conflict item and conflict content, and prompting the user whether to ignore, if the user chooses to ignore, then keeping the conflicted information, if the user does not ignore, then deleting the redundant information according to the user selection.

A touch terminal comprising a multi-point touch touchscreen is provided for implementing the above method for processing merge and deduplication operations on contact entries, comprising:
- an application opening module for opening an address book and displaying all contact entries;
- a dragging and merging module for recording selected contact entries according to a selection action on contact entries, receiving a drag action to merge contact entries, and merging the selected contact entries according to the drag action;
- an information processing module for removing the duplicated information in the selected contact entries during merging, and detecting conflict information in the selected contact entries.

According to an embodiment, the touch terminal further comprises: a sorting module for sorting the contact entries according to the contact names.

Compared with the prior art, the present invention provides a processing method and a touch terminal for merge and deduplication operations on contact entries. When an address book is opened, recording selected contact entries according to a selection action on contact entries, receiving a drag action to merge contact entries, and merging the selected contact entries according to the drag action; removing the duplicated information in the selected contact entries during merging, and detecting conflict information in the selected contact entries. The present invention can delete redundant records in an address book simply by dragging contact entries to be merged, remove the duplicated information while merging, and detect conflict information, which enhances the smart effect of the touch terminal and improves user experience.

The aforementioned characteristics, features and advantages of the invention as well as the way they are achieved will be further illustrated in connection with the following examples and considerations as discussed in view of the figures.
- Fig.1: is a flow chart of the method for processing merge and deduplication operations on contact entries according to the present invention.
- Fig.2: illustrates a contact list in the method for processing merge and deduplication operations on contact entries according to the present invention.
- Fig.3: illustrates merging two contact entries in the method for processing merge and deduplication operations on contact entries according to the present invention.
- Fig.4: illustrates merging more than two contact entries in the method for processing merge and deduplication operations on contact entries according to the present invention.
- Fig.5: is a structural block diagram of the touch terminal according to the present invention.

The present invention provides a processing method and a touch terminal for merge and deduplication operations on contact entries. When carrying out a deduplication operation, a user just needs to use one finger to keep on pressing one of the records (contact entry) in the address book list; use the other finger to press another record and drag toward the position of the first pressed record; when the two records become overlapped, a merge operation is carried out with the first pressed record as the record to be kept, all records between the first pressing and the second pressing are merged, or only the two pressed records are merged. The present invention carries out operations by directly moving fingers on the screen, which complies with human operating habits, can process two or more records, and is very flexible. Moreover, a user can complete such operations on one screen, leading to very simple and convenient operations.

To make the objects, technical solutions and advantages of the present application clearer and more specific, the present application will be further described in detail below with reference to the accompanying drawings and embodiments. It should be understood that the specific embodiments herein are only used to describe the present application, rather than limit the present application.

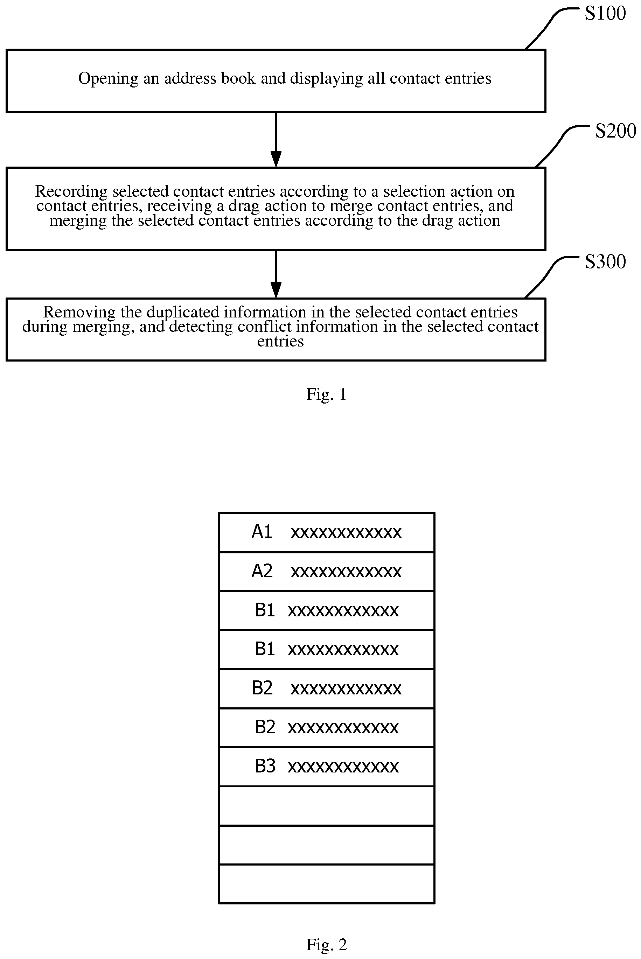

Please refer to Fig. 1, which is a flow chart of a preferred embodiment of the method for processing merge and deduplication operations on contact entries according to the present invention. Said method comprises:
S100. Opening an address book and displaying all contact entries.

In this embodiment, when opening the address book, the contact entries are sorted according to the contact names. As shown in Fig. 2, using a smartphone as an example, in the smartphone, contacts are mostly displayed to users in the form of a list, which are typically sorted in the alphabetical order of contact names. As a result, redundant contact information is usually arranged together, which creates a condition for merge and deduplication operations.

S200. Recording selected contact entries according to a selection action on contact entries, receiving a drag action to merge contact entries, and merging the selected contact entries according to the drag action.

During specific implementation, a user uses fingers to touch the touchscreen to select contact entries, a selection mode may be set via a menu during selection to select two or more contact entries with two touch points. For example, during selection, the selection range may be set to be all contact entries between the two touch points, or the selection range may be set to be the contact entries at the positions of the two touch points. These operation processes and implementation modes will be described in detail below.

S300. Removing the duplicated information in the selected contact entries during merging, and detecting conflict information in the selected contact entries.

Wherein, said S300 specifically comprises: Step 1. When merging contact entries, removing the duplicated information in the contact entries; Step 2. Detecting if there is conflict among various information in the selected contact entries; if there is, outputting a prompt message to prompt the user whether to ignore the conflicted information; if the user selects yes, saving the conflicted information, if the user selects no, saving or deleting the conflicted information according to the user selection.

During specific implementation, to merge contact entries, it is necessary to first perform conflict detection on entries to be merged, and each attribute of each contact entry (e.g. contact name, address and other information) needs to be compared, if an attribute only exists in one contact entry, it indicates no conflict; if multiple contact entries have an identical attribute (e.g. address), but these attributes have the same value, it indicates that those are duplicated information and have no conflict, and only one piece of the information needs to be kept during merging; only when multiple contact entries have an identical attribute and more than two values are different can a conflict be detected (e.g. two different addresses), and at this moment the conflict information needs to be recorded, specifically comprising: name of the conflict item and conflict content, and prompting the user whether to ignore, if the user chooses to ignore, then keeping the conflicted information, and if the user does not ignore, then deleting the redundant information according to the user selection.

The method for processing merge and deduplication operations on contact entries according to the present invention may carry out merge operation on two or more contact entries.

When merging two contact entries, said Step S200 specifically comprises: Step 1. When detecting that there are two touch points on the touchscreen, recording contact entries in the address book at the coordinates of said two touch points; Step 2. Receiving a drag action to merge contact entries, when the contact entry at one touch point is dragged to partially overlap with the contact entry at the other touch point, merging these two contact entries.

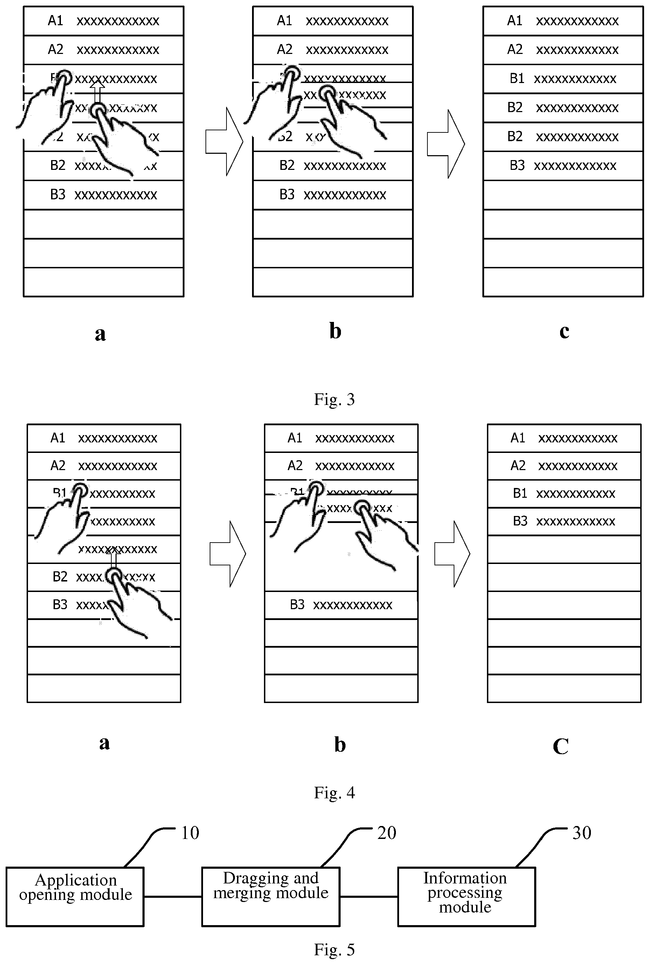

Wherein, the contact entries in the address book at the coordinates of said two touch points are two adjacent contact entries or two separated contact entries in the address book. When merging two adjacent contact entries, as shown in Fig. 3, if the user believes that two B1s in Fig. 3a represent the same contact, then in the address book, uses one finger to keep on pressing the first record (i.e. the first contact entry) therein; uses the other finger to press the second record (i.e. the second contact entry), and when these two records are selected, the second finger controls the second selected record to move toward the first selected record; when the two records become overlapped (as shown in Fig. 3b), releases the second finger or both fingers, and at this moment, a merge operation is carried out with the first pressed record as the record to be kept to merge the two records. The merged contact entry is shown in Fig. 3c. When detecting if a merge operation needs to be carried out, the judgment is reached according to the number of touch points on the touch screen. If there is only one touch point, or the touch points have disappeared, it indicates that the user initiates a merge operation. At this moment, if two contact entries do not have an overlapping portion, then the dragged contact entry is controlled to move to the original position. During merging, the present invention uses the pressed and stationary entry as the merging basis, and merges the moving entry into said entry. Although this embodiment uses the first record as the basis and merges the dragged second record into the first record, the second record may be pressed and held in other embodiments, while the first record is dragged to be merged into the second record. The present invention has no limitations hereon.

If a user wants to merge more than two contact entries at once, a mode of contact entry selection may be set through the setting function. During merging, said Step S200 specifically comprises: Step 1. When detecting that there are two touch points on the touchscreen, recording all contact entries between the coordinates of said two touch points; Step 2. Receiving a drag action to merge contact entries, when the contact entry at one touch point is dragged to partially overlap with the contact entry at the other touch point, merging said all contact entries.

When selecting contact entries, two or more adjacent records may be selected. As shown in Fig. 2 and Fig. 4, in the address book list in Fig. 2, if the user determines that two contact entries with the name of B1 and two contact entries with the name of B2 represent the same contact, and that the only difference is the name, then the operation shown in Fig. 4 may be carried out. As shown in Fig. 4a, the user uses one finger to press the first record (the foremost contact entry, e.g. the first B1), uses the other finger to press the fourth record (the last contact entry, e.g. the first B2), and makes the second finger to press the fourth record and move toward the first record; when the fourth record and the first record become overlapped (as shown in Fig. 4b), releases the second finger or both fingers, and at this moment, a merge operation is carried out with the first pressed record as the record to be kept to merge all records between the first pressing and the second pressing. When the fingers are released, the four contact entries are merged to one B1, as shown in Fig. 4c. When these four records have duplications, similarly using the first record as the basis, removing the duplicated information in other records, and detecting if there is conflict information.

When contact entries are merged, all merged contact entries become only one contact entry in the address book, and therefore only have one name. When more than two contact entries are merged, if the user desires to keep the name in the middle, two operations may be carried out to achieve this goal. During merging, moreover, the name of the stationary contact entry is used as the name after merging, and the dragged contact entry is merged into the stationary contact entry.

The method for processing merge and deduplication operations on contact entries according to the present invention has a simple and quick operating method, the operations by directly moving fingers on the screen comply with human physiologic habits, and are therefore intuitive and easy to be accepted by users. The operation can process two records and multiple records, and is very flexible. Moreover, a user can complete such operations on only one screen, making it very convenient such that the time required by a user to carry out the operation of merging contact entries is significantly reduced. In addition, as the present invention has the capability of detecting conflicts, it may prevent merge operations undesired by the user from taking place, thereby ensuring safety.

The merge operation according to the present invention takes place in an address book list. In existing smartphone systems (e.g. the android system), address book lists do not provide such a mode of dragging operation and related function interfaces. Therefore, the present invention needs to reload an address book list by adding corresponding functions to implement the dragging operation on contact entries, through which a user's intent of merge operation can be identified and corresponding displays can be provided to the user.

When the intent of merge operation is identified, the intelligent terminal needs to implement the function method for carrying out a merge operation on contact entries in a contact database, thereby implementing the actual merge of contact entries. Prior to the execution of a merge operation, moreover, a confirmation needs to be made with the user to prevent a misoperation by the user.

The implementation of the present invention will be described in detail below with a smartphone as an example.

### 1. Implementing a dragging operation on contact entries on the address book interface:

With the android system as an example, the address book list file on the user interface is:
packages/apps/Contacts/src/com/android/contacts/list/DefaultContactBrowseListFragm ent.java.

To achieve longitudinal dragging of a contact entry, the present invention needs to revise the touch event processing function (the onTouchEvent function) of the address book and needs to add the support of multi-point touch, specifically:
First, when it is detected that there are two touch points on the touchscreen, and when the second touch point is pressed, recording all contact entries between the two coordinate points, as the ACTION_POINTER_DOWN portion in the following pseudo-code. Subsequently when the second touch point moves, all recorded contact entries move toward the contact entry selected by the first finger, the moving distance will be adjusted according to the distance between the moved contact entries and the contact entry selected by the first finger, thereby achieving the effect that all recorded contact entries approach the contact entry selected by the first finger at the same time, as the ACTION_MOVE portion in the following pseudo-code. Lastly, when the second finger leaves the screen, determining if the contact entry selected by the first finger has any overlapping portion with the contact entry selected by the second finger, if yes, then triggering the execution of a merge operation, otherwise moving all moved views to the original positions, as the ACTION_POINTER_UP portion in the following pseudo-code.

Wherein, the revision of the touch event processing function (the onTouchEvent function) may be carried out by means of inheriting a parent function, and see the following pseudo-code for a more specific description:

```
 private float yo = -1.0f; // the Y-axis position of the second point pressed last time
 private float firstY1; // the boundary coordinate position within which the second
 finger may slide
 private float firstY2; // the boundary coordinate position within which the second
 finger may slide
 int position 1; // the position of the contact entry selected by the first finger in the
 list
 int position2; // the position of the contact entry selected by the second finger in the
 list
 private chooseObj[] choosedobjs; // for recording contact entries between two fingers
 and movement amount record
 private boolean choosedSameView = false; // if two fingers select the same contact
 entry
 @ Override
 public boolean onTouchEvent(MotionEvent ev) { // reload the touchscreen event
 int action = ev.getAction(); // get the event
 int pointcount = ev.getPointerCount(); // get the number of touch points
 if (pointcount < 2) { // if a single point touch
 return super.onTouchEvent(ev); // execute operation of single point touch
 }
 switch (action & MotionEvent.ACTION_MASK) {
 case MotionEvent.ACTION_POINTER_DOWN: { // if it is a pressing event of the
 second point
 int x1 = (int) ev.getX(0); // record the coordinate position of the touch point
 int y1 = (int) ev.getY(0);
 int x2 = (int) ev.getX(1);
 int y2 = (int) ev.getY(1);
 yo = y2; // record the Y-axis position of the second point pressed last time
 firstY1 = y1; // record the boundary coordinate position within which the second
 finger may slide
 firstY2 = y2; // record the boundary coordinate position within which the second
 finger may slide
 int position 1 = pointToPosition(xl, yl); // get the position of the contact entry
 pressed by the first finger in the list
 int position2 = pointToPosition(x2, y2); // get the position of the contact entry
 pressed by the second finger in the list
 choosedSameView = false;
 if (position 1 == position2) { // exit in case of the same contact entry
  choosedSameView = true;
  break;
  }
  // record the views of all contact entries between the first finger and the second finger
  saveAllchoosedItems(choosedobjs, position 1, position2);
  break;
  }
  case MotionEvent.ACTION_MOVE: { // if it is a point motion event
  float y2 = ev.getY(1); // get the current Y coordinate of the second touch point
  // exit in case of exceeding the boundary or the same contact entry
  if (choosedSameView || !isIn(firstYl, y2, firstY2)) break;
  float offd = y2 - yo; // calculate the current movement distance of the second touch
  point
  yo = y2; // update the Y-axis position of the second point pressed last time
  // calculate the number of contact entries between the two fingers
  int count = choosedobjs != null ? choosedobjs.length : 0;
  for (int i = 0; i < count; i++) {
 float offdd = offd ∗ i / (count - 1); // calculate the distance of movement for the view
 of each contact entry
 choosedobjs[i].move(offdd); // move the views of the contact entries
 }
 break;
 }
 case MotionEvent.ACTION_POINTER_UP: { // in case of an event that the second
 finger is away from the screen
  float y2 = ev.getY(1); // get the current Y coordinate of the second touch point
  // if the first selected contact entry and the second selected contact entry are close
  enough, trigger a merge operation
  if (|y2 - y1| < minDistance) {
   madapter.mergeContacts(choosedobjs); // merge operation
   madapter.notifyDataSetChanged(); // refresh
   break;
   }// if they cannot be merged, give up and restore the list
  int count = choosedobjs != null ? choosedobjs.length : 0;
  for (int i = 0; i < count; i++) {
    choosedobjs[i].moveBack(); // move all entry views back to the original positions }
  choosedobjs = null; // empty the selected contact entries
  madapter.notifyDataSetChanged(); // refresh
  break;
  }
  default:;
  }
 return true;
 }
```

The choosedobjs in the pseudo-code above records all contact entries selected by the first finger and the second finger, each contact entry is recorded in the object of chooseObj, which records the view of the contact entry, the contact information and the displacement record, and the movement of a view is also implemented by the move method in this object, wherein the move method is implemented by setting an offset through the offsetTopAndBottom(d) function, i.e. when dragging the contact entry, an offset is set through the function offsetTopAndBottom(d) for the view, and the specific pseudo-code is as follows:

```
 private void move(int d) { //move method
 view.offsetTopAndBottom(d); // set offset
 offset += d; // record offset
 }
```

When the second finger leaves the screen, if it is identified that a merge operation can be carried out, then trigger a merge operation to merge the selected contact entries through the madapter.mergeContacts(choosedobjs) function, as shown in the above madapter.mergeContacts(choosedobjs) function.

### 2. Contact entries merge and user confirmation operations

To merge contact entries, it is necessary to first perform conflict detection on entries to be merged, and each attribute of each contact entry (e.g. contact name, address and other information) needs to be compared, if an attribute only exists in one contact entry, it indicates no conflict; if multiple contact entries have an identical attribute (e.g. address), but these attributes have the same value, there is no conflict either, and only when more than two values are different can a conflict be detected (e.g. two different addresses), and at this moment, the conflict information needs to be recorded, comprising: name of the conflict item and conflict content.

Wherein, the function for conflict check is: private boolean checkConflict(String item1, String item2, String tag), and the specific implementation is as follows:

```
 // function for conflict check
 private boolean checkConflict(String item1, String item2, String tag) {
 if(iteml == null) { // if it is the first record, it is impossible to have conflict, record
 directly
  item1 = item2;
  return false;
 } else if (item2 == iteml){ // if two records are the same, no conflict either
  return false;
 } else {
  conflictString.append(tag + item1 + " " + item2); // in case of conflict, record the
  conflict content
  return true;
 }
 }
```

In the function for conflict check, the function returns true if a conflict is detected, otherwise the function returns false. If no conflict is detected, then the value of the parameter item1 will record the value to be saved. The conflictString in the code above is a character string to record the conflict content, which will be mentioned again in the code below. In this embodiment, conflict check is not performed on telephone numbers, as one contact may use multiple numbers, but duplicated ones will be removed.

In the embodiment of the present invention, the process of conflict check is also a process of merging attributes of contact entries, which is just not ultimately written into the database. In this process, the present invention will keep one value for each contact entry attribute. If there is no conflict, a unique value is saved, and in case of a conflict, the attribute value of the contact entry that is the closest to the entry selected by the first finger is saved.

When attribute values of each contact entry are present, they can be written into the database. In case of a conflict, however, a confirmation must be made with the user by informing the user of the conflict content. If the user confirms that the conflict may be ignored, the present invention may proceed to carry out the actual operation to write into the database.

The detailed process of the whole merge operation is shown by the following pseudo-code:

```
 private StringBuilder conflictString; // conflict record character string
 // the following is used for attribute information of contact entries to be ultimately saved
 private String name, company, email, im, address, notes, nickname, website;
 private HashMap<String, String> phoneNumber = new HashMap<String, String>();
 public void mergeContacts(final chooseObj[] contacts) {
 boolean haveConflict = false; // set a conflict tag
 conflictstring = new StringBuilder(); // set a conflict record character string
 int count = contacts.length; // number to be merged
 for (int i = 0; i<count; i++) { // perform conflict check on each entry
  // check if there is name conflict
  haveConflict|=checkConflict(name,getNameFromUri(contacts[i].uri),"Name");
  // check if there is company name conflict
  haveConflict|=checkConflict(company,getCompanyFromUri(contacts[i].uri),
  "Company");
  // check if there is mailing address conflict
  haveConflictl= checkConflict(email, getEmailFromUri(contacts[i].uri), "Email");
  // check if there is instant message address conflict
  haveConflict|=checkConflict(im,getIMFromUri(contacts[i].uri),"IM");
  // check if there is address conflict
  haveConflictl=checkConflict(address,getAddressFromUri(contacts[i].uri), "Address");
  // check if there is note conflict
  haveConflict |= checkConflict(notes, getNotesFromUri(contacts[i].uri), "Notes");
  // check if there is nickname conflict
  haveConflictl=checkConflict(nickname,getNickNameFromUri(contacts[i].uri),
  "NickName");
  // check if there is website conflict
  haveConflictl=checkConflict(website,getWebsiteFromUri(contacts[i].uri), "Website");
  // record all telephone numbers (with duplicated ones removed)
  String number, kind;
 getPhoneNumberFromUri(contacts[i].uri, number, kind);
  if (!phoneNumber.containsKey(number)) {
  phoneNumber.put(number, kind);
  }
  }
  if (haveConflict) { // in case of a conflict, pop up a dialogue box and request the user
  to confirm
  new AlertDialog.Builder(mContext)
    .setTitle("there is a conflict, whether to merge, and the conflict is: "); // set a title
    .setMessage(conflictString.toString()); // set conflict content
    .setPositiveButton("ignore the conflict", new DialogInterface.OnClickListener() {
     // if the user selects, then ignore the conflict, and carry out the merge operation
     public void onClick(DialogInterface dialog, int which) {
       mergeContacts(phoneNumber, name, company, email, // merge operation
         im, address, notes, nickname, website, contacts);
      }
    })
   .setNegativeButton("cancel", null)// if the user cancels, then nothing will be carried
   out
   .create().show();
  } else { // if there is no conflict, directly carry out the merge operation without
  prompting
  mergeContacts(phoneNumber, name, company, email,
    im, address, notes, nickname, website, contacts);
    }
 }
```

It can be seen from the code above that the first part of the entire process is conflict check, and subsequently in case of a conflict, pop up a dialogue box to tell the user what contents have conflicts, if the user selects to ignore, then continue to carry out the merge operation, and if no conflict is detected, directly carry out the merge operation without prompting the user.

Wherein, the process to merge contact entries is: first, writing the attribute information of contact entries obtained in the process of conflict check into the database record of the contact entry selected by the first finger, and then deleting other contact entries.

The function of the merge operation is as follows:

```
 // The function to carry out the merge operation
 private void mergeContacts(HashMap<String, String> phoneNumber, String name,
 String company, String email,
  String im, String address, String notes, String nickname, String website, chooseObj[]
  contacts) {
 int count = contacts.length; // number to be merged
 // the first record is the record selected by the first finger, and record all information to
 be merged into the contact entry pointed by URI
 EditAndSaveContact(contacts[0].uri, phoneNumber, name, company,
   email, im, address, notes, nickname, website);
 // delete other contact entries
 for (int i = 1; i<count; i++) {
  deleteTheContact(contacts[i].uri);
  }
 }
```

Accordingly, the present invention further provides a touch terminal for implementing the above method for processing merge and deduplication operations on contact entries, said touch terminal is preferably a smartphone, and as shown in Fig. 5, it comprises: an application opening module 10, a dragging and merging module 20 and an information processing module 30. Said application opening module 10 is used for opening an address book and displaying all contact entries; the dragging and merging module 20 is used for recording selected contact entries according to a selection action on contact entries, receiving a drag action to merge contact entries, and merging the selected contact entries according to the drag action; the information processing module 30 is used for removing the duplicated information in the selected contact entries during merging, and detecting conflict information in the selected contact entries. Please refer to the above embodiments for the specific working principle and implementation thereof.

Furthermore, the touch terminal according to the present invention further comprises: a sorting module for sorting the contact entries according to the contact names. Please refer to the above embodiments for the specific working principle and implementation thereof.

In summary, the present invention can delete redundant records in an address book simply by dragging contact entries to be merged, remove the duplicated information while merging, and detect conflict information, which enhances the smart effect of the touch terminal and improves user experience.

In addition, the present invention carries out operations by directly moving fingers on the screen, which complies with human operating habits, can process two or more records, and is very flexible. Moreover, a user can complete such operations on one screen, leading to very simple and convenient operations.

It should be understood that, to those skilled in the art, equivalent substitutions or modifications may be made according to the technical solution and inventive concept of the present invention.

## Claims

1. A method for processing merge and deduplication operations on contact entries of a communication terminal comprising a multi-point touch touchscreen, the method comprising:
A. Opening an address book stored in the communication terminal and displaying all contact entries (A1, A2, B1, B2, B3) (S100);
B. Recording selected contact entries according to a selection action on contact entries, receiving a drag action to merge contact entries, and merging the selected contact entries according to the drag action (S200);
C. Removing the duplicated information in the selected contact entries during merging, and detecting conflict information in the selected contact entries (S300),
**characterized in that** Step B specifically comprises:
B11. When detecting that there are exactly two touch points on different contact entries on the touchscreen, recording all contact entries between the coordinates of said two touch points;
B12. Receiving a drag action to merge contact entries, when the contact entry at one touch point is dragged to partially overlap with the contact entry at the other touch point, merging said all contact entries.

2. The method for processing merge and deduplication operations on contact entries according to claim 1, **characterized in that** Step A further comprises: sorting the contact entries according to the contact names.

3. The method for processing merge and deduplication operations on contact entries according to any of the preceding claims, **characterized in that** Step B specifically comprises:
B21. When detecting that there are two touch points on the touchscreen, recording contact entries in the address book at the coordinates of said two touch points;
B22. Receiving a drag action to merge contact entries, when the contact entry at one touch point is dragged to partially overlap with the contact entry at the other touch point, merging these two contact entries.

4. The method for processing merge and deduplication operations on contact entries according to claim 3, **characterized in that** in Step B21, the contact entries in the address book at the coordinates of said two touch points are two adjacent contact entries or two separated contact entries in the address book.

5. The method for processing merge and deduplication operations on contact entries according to any of preceding claims, **characterized in that** when dragging the contact entry, an offset is set for the view.

6. The method for processing merge and deduplication operations on contact entries according to any of the preceding claims, **characterized in that** Step C specifically comprises:
C1. When merging contact entries, removing duplicated information in the selected contact entries;
C2. Detecting if there is conflict among all pieces of information in the selected contact entries;
C3. If there is, outputting a prompt message to prompt the user whether to ignore the conflicted information;
C4. If yes, saving the conflicted information.

7. The method for processing merge and deduplication operations on contact entries according to any of the preceding claims, **characterized in that** Step C further comprises: comparing each attribute of each contact entry, if an attribute only exists in one contact entry, it indicates no conflict; if multiple contact entries have an identical attribute, but these attributes have the same value, it indicates that those are duplicated information and have no conflict, and only one piece of the information needs to be kept during merging; when multiple contact entries have an identical attribute and more than two values are different, a conflict will be detected; and recording the conflict information, specifically comprising: name of the conflict item and conflict content, and prompting the user whether to ignore, if the user chooses to ignore, then keeping the conflicted information, if the user does not ignore, then deleting the redundant information according to the user selection.

8. The method for processing merge and deduplication operations on contact entries according to any of the preceding claims, **characterized in that** the terminal is a smartphone.

9. A communication terminal comprising a multi-point touch touchscreen, comprising:
- an application opening module (10) for opening an address book stored in the communication terminal and displaying all contact entries (A1, A2, B1, B2, B3);
- a dragging and merging module (20) for recording selected contact entries according to a selection action on contact entries, receiving a drag action to merge contact entries, and merging the selected contact entries according to the drag action;
- an information processing module (30) for removing the duplicated information in the selected contact entries during merging, and detecting conflict information in the selected contact entries,
**characterized in that** the communication terminal is adapted to implement the method for processing merge and deduplication operations on contact entries according to any of the preceding claims.

10. The communication terminal according to claim 9, **characterized in that** the communication terminal further comprises: a sorting module for sorting the contact entries according to the contact names

11. The communication terminal according to any of claims 9 and 10, **characterized in that** the communication terminal is a smartphone.

## Patentansprüche

1. Verfahren zum Verarbeiten von Zusammenführungs- und Duplikatentfernungsoperationen an Kontakteinträgen eines Kommunikationsendgeräts, das einen Mehrpunkt-Berührungsschirm umfasst, wobei das Verfahren umfasst:
A. Öffnen eines Adressbuchs, das in dem Kommunikationsendgerät gespeichert ist, und Anzeigen aller Kontakteinträge (A1, A2, B1, B2, B3) (S100);
B. Erfassen ausgewählter Kontakteinträge gemäß einer Auswahlaktion an Kontakteinträgen, Empfangen einer Ziehen-Aktion zum Zusammenführen von Kontakteinträgen und Zusammenführen der ausgewählten Kontakteinträge gemäß der Ziehen-Aktion (S200);
C. Entfernen der doppelten Information in den ausgewählten Kontakteinträgen während des Zusammenführens und Erkennen widersprüchlicher Informationen in den ausgewählten Kontakteinträgen (S300),
**dadurch gekennzeichnet, dass** Schritt B insbesondere umfasst:
B11. Wenn erkannt wird, dass genau zwei Berührungspunkte auf verschiedenen Kontakteinträgen auf dem Berührungsschirm vorhanden sind, Erfassen aller Kontakteinträge zwischen den Koordinaten der beiden Berührungspunkte;
B12. Empfangen einer Ziehen-Aktion zum Zusammenführen von Kontakteinträgen, wenn der Kontakteintrag an einem Berührungspunkt derart gezogen wird, dass er teilweise den Kontakteintrag an dem anderen Berührungspunkt überlappt, wobei alle Kontakteinträge zusammengeführt werden.

2. Verfahren zum Verarbeiten von Zusammenführungs- und Duplikatentfernungsoperationen an Kontakteinträgen nach Anspruch 1, **dadurch gekennzeichnet, dass** Schritt A ferner umfasst:
Sortieren der Kontakteinträge nach den Namen der Kontakte.

3. Verfahren zum Verarbeiten von Zusammenführungs- und Duplikatentfernungsoperationen an Kontakteinträgen nach einem der vorstehenden Ansprüche, **dadurch gekennzeichnet, dass** Schritt B umfasst:
B21. Wenn erkannt wird, dass zwei Berührungspunkte auf dem Berührungsschirm vorhanden sind, Erfassen der Kontakteinträge im Adressbuch an den Koordinaten der beiden Berührungspunkte;
B22. Empfangen einer Ziehen-Aktion zum Zusammenführen von Kontakteinträgen, wenn der Kontakteintrag an einem Berührungspunkt derart gezogen wird, dass er teilweise den Kontakteintrag an dem anderen Berührungspunkt überlappt, wobei diese beiden Kontakteinträge zusammengeführt werden.

4. Verfahren zum Verarbeiten von Zusammenführungs- und Duplikatentfernungsoperationen an Kontakteinträgen nach Anspruch 3, **dadurch gekennzeichnet, dass** in Schritt B21 die Kontakteinträge in dem Adressbuch an den Koordinaten der beiden Berührungspunkte zwei benachbarte Kontakteinträge oder zwei voneinander getrennte Kontakteinträge im Adressbuch sind.

5. Verfahren zum Verarbeiten von Zusammenführungs- und Duplikatentfernungsoperationen an Kontakteinträgen nach einem der vorstehenden Ansprüche, **dadurch gekennzeichnet, dass** beim Ziehen des Kontakteintrags ein Versatz für die Ansicht eingestellt wird.

6. Verfahren zum Verarbeiten von Zusammenführungs- und Duplikatentfernungsoperationen an Kontakteinträgen nach einem der vorstehenden Ansprüche, **dadurch gekennzeichnet, dass** Schritt C umfasst:
C1. Beim Zusammenführen von Kontakteinträgen, Entfernen doppelter Informationen in den ausgewählten Kontakteinträgen;
C2. Erkennen, ob ein Widerspruch zwischen allen Informationen in den ausgewählten Kontakteinträgen besteht;
C3. Falls dies der Fall ist, Ausgeben einer Abfragenachricht, um den Benutzer zu fragen, ob die widersprüchlichen Informationen ignoriert werden sollen;
C4. Falls ja, Speichern der widersprüchlichen Informationen.

7. Verfahren zum Verarbeiten von Zusammenführungs- und Duplikatentfernungsoperationen an Kontakteinträgen nach einem der vorstehenden Ansprüche, **dadurch gekennzeichnet, dass** Schritt C ferner umfasst:
Vergleichen jedes Attributs jedes Kontakteintrags, falls ein Attribut nur in einem Kontakteintrag vorliegt, weist dies darauf hin, dass kein Widerspruch vorliegt; falls mehrere Kontakteinträge ein identisches Attribut aufweisen, diese Attribute aber denselben Wert haben, weist dies darauf hin, dass es sich um doppelte Informationen handelt, die sich nicht widersprechen, und nur eine dieser Informationen muss im Rahmen der Zusammenführung beibehalten werden; falls mehrere Kontakteinträge ein identisches Attribut aufweisen und mehr als zwei Werte unterschiedlich sind, wird ein Widerspruch erkannt; und Erfassen der widersprüchlichen Informationen, umfassend: den Namen der widersprüchlichen Position und den widersprüchlichen Inhalt, und Fragen des Benutzers, ob dies ignoriert werden sollen, falls der Benutzer sich für ein Ignorieren entscheidet, Bewahren der widersprüchlichen Informationen, falls der Benutzer dies nicht ignoriert, Löschen der redundanten Informationen gemäß der Auswahl des Benutzers.

8. Verfahren zum Verarbeiten von Zusammenführungs- und Duplikatentfernungsoperationen an Kontakteinträgen nach einem der vorstehenden Ansprüche, **dadurch gekennzeichnet, dass** das Endgerät ein Smartphone ist.

9. Kommunikationsendgerät, aufweisend einen Mehrpunkt-Berührungsschirm umfasst, aufweisend:
- ein Anwendungs-Öffnungs-Modul (10) zum Öffnen eines Adressbuchs, das in dem Kommunikationsendgerät gespeichert ist, und Anzeigen aller Kontakteinträge (A1, A2, B1, B2, B3);
- ein Ziehen-und-Zusammenführen-Modul (20) zum Erfassen ausgewählter Kontakteinträge gemäß einer Auswahlaktion an Kontakteinträgen, Empfangen einer Ziehen-Aktion zum Zusammenführen von Kontakteinträgen und Zusammenführen der ausgewählten Kontakteinträge gemäß der Ziehen-Aktion;
- ein Informationsverarbeitungs-Modul (30) zum Entfernen der doppelten Information in den ausgewählten Kontakteinträgen während des Zusammenführens und Erkennen widersprüchlicher Information in den ausgewählten Kontakteinträgen,
**dadurch gekennzeichnet, dass** das Kommunikationsendgerät dazu eingerichtet ist, das Verfahren zum Verarbeiten von Zusammenführungs- und Duplikatentfernungsoperationen an Kontakteinträgen nach einem der vorstehenden Ansprüche zu implementieren.

10. Kommunikationsendgerät nach Anspruch 9, **dadurch gekennzeichnet, dass** das Kommunikationsendgerät ferner umfasst: ein Sortier-Modul zum Sortieren der Kontakteinträge nach den Namen der Kontakte.

11. Kommunikationsendgerät nach einem der Ansprüche 9 und 10, **dadurch gekennzeichnet, dass** das Kommunikationsendgerät ein Smartphone ist.

## Revendications

1. Procédé de traitement d'opérations de fusion et de déduplication d'entrées de contact d'un terminal de communication comprenant un écran tactile multipoint tactile, le procédé comprenant les étapes suivantes :
A. Ouvrir un carnet d'adresses stocké dans le terminal de communication et afficher toutes les entrées de contact (A1, A2, B1, B2, B3) (S100) ;
B. Enregistrer les entrées de contact sélectionnées selon une action de sélection sur les entrées de contact, recevoir une action de glisser pour fusionner les entrées de contact, et fusionner les entrées de contact sélectionnées conformément à l'action de glisser (S200) ;
C. Supprimer les informations dupliquées dans les entrées de contact sélectionnées pendant la fusion, et détecter des informations de conflit dans les entrées de contact sélectionnées (S300),
**caractérisé en ce que** l'étape B comprend spécifiquement les étapes suivantes :
B11. Lorsqu'il est détecté qu'il y a exactement deux points de contact sur des entrées de contact différentes sur l'écran tactile, enregistrer toutes les entrées de contact entre les coordonnées desdits deux points de contact ;
B12. Recevoir une action de glisser pour fusionner des entrées de contact, lorsque l'entrée de contact à un point de contact est déplacée pour chevaucher partiellement l'entrée de contact à l'autre point de contact, fusionner toutes lesdites entrées de contact.

2. Procédé de traitement d'opérations de fusion et de déduplication d'entrées de contact selon la revendication 1, **caractérisé en ce que** l'étape A comprend en outre de trier les entrées de contact selon les noms des contacts.

3. Procédé de traitement d'opérations de fusion et de déduplication d'entrées de contact selon l'une quelconque des revendications précédentes, **caractérisé en ce que** l'étape B comprend spécifiquement les étapes suivantes :
B21. Lorsqu'il est détecté qu'il y a deux points de contact sur l'écran tactile, enregistrer les entrées de contact dans le carnet d'adresses aux coordonnées desdits deux points de contact ;
B22. Recevoir une action de glisser pour fusionner des entrées de contact, lorsque l'entrée de contact à un point de contact est déplacée pour chevaucher partiellement l'entrée de contact à l'autre point de contact, fusionner ces deux entrées de contact.

4. Procédé de traitement d'opérations de fusion et de déduplication d'entrées de contact selon la revendication 3, **caractérisé en ce qu'**à l'étape B21, les entrées de contact dans le carnet d'adresses aux coordonnées desdits deux points de contact sont deux entrées de contact adjacentes ou deux entrées de contact séparées dans le carnet d'adresses.

5. Procédé de traitement d'opérations de fusion et de déduplication d'entrées de contact selon l'une quelconque des revendications précédentes, **caractérisé en ce que** lorsque l'on fait glisser l'entrée de contact, un décalage est défini pour la vue.

6. Procédé de traitement d'opérations de fusion et de déduplication d'entrées de contact selon l'une quelconque des revendications précédentes, **caractérisé en ce que** l'étape C comprend spécifiquement les étapes suivantes :
C1. Lors de la fusion d'entrées de contact, supprimer les informations dupliquées dans les entrées de contact sélectionnées ;
C2. Détecter s'il y a conflit entre tous les éléments d'informations dans les entrées de contact sélectionnées ;
C3. S'il y en a un, afficher un message d'invite pour demander à l'utilisateur s'il doit ignorer les informations en conflit ;
C4. Dans l'affirmative, sauvegarder les informations en conflit.

7. Procédé de traitement d'opérations de fusion et de déduplication d'entrées de contact selon l'une quelconque des revendications précédentes, **caractérisé en ce que** l'étape C comprend en outre les étapes suivantes : comparer chaque attribut de chaque entrée de contact, et si un attribut n'existe que dans une entrée de contact, il n'indique aucun conflit ; si plusieurs entrées de contact ont un attribut identique, mais si ces attributs ont la même valeur, il indique qu'il s'agit d'informations dupliquées et qu'il n'y a pas de conflit, et qu'un seul élément d'informations doit être conservé pendant la fusion ; lorsque plusieurs entrées de contact ont un attribut identique et lorsque plus de deux valeurs sont différentes, un conflit sera détecté ; et l'enregistrement des informations de conflit comprend spécifiquement : le nom de l'élément de conflit et le contenu du conflit ; demander à l'utilisateur s'il doit ignorer ; si l'utilisateur choisit d'ignorer conserver alors les informations en conflit ; si l'utilisateur n'ignore pas, supprimer alors les informations redondantes conformément à la sélection utilisateur.

8. Procédé de traitement d'opérations de fusion et de déduplication d'entrées de contact selon l'une quelconque des revendications précédentes, **caractérisé en ce que** le terminal est un smartphone.

9. Terminal de communication comprenant un écran tactile multipoint, comprenant :
- un module d'ouverture d'application (10) pour ouvrir un carnet d'adresses stocké dans le terminal de communication et afficher toutes les entrées de contact (A1, A2, B1, B2, B3) ;
- un module de glisser et fusionner (20) pour enregistrer des entrées de contact sélectionnées conformément à une action de sélection sur des entrées de contact, recevoir une action de glisser pour fusionner des entrées de contact, et fusionner les entrées de contact sélectionnées conformément à l'action de glisser ;
- un module de traitement d'informations (30) pour supprimer les informations dupliquées dans les entrées de contact sélectionnées pendant la fusion, et détecter les informations de conflit dans les entrées de contact sélectionnées,
**caractérisé en ce que** le terminal de communication est adapté pour mettre en œuvre le procédé de traitement des opérations de fusion et de déduplication d'entrées de contact selon l'une quelconque des revendications précédentes.

10. Terminal de communication selon la revendication 9, **caractérisé en ce que** le terminal de communication comprend en outre : un module de tri pour trier les entrées de contact selon les noms des contacts.

11. Terminal de communication selon l'une quelconque des revendications 9 et 10, **caractérisé en ce que** le terminal de communication est un smartphone.
